# EUROPEAN PATENT APPLICATION

(11) **EP 4 723 614 A1**
(43) Date of publication of application: **08.04.2026**
(21) Application number: 24815282.9
(22) Date of filing: 21.05.2024
(51) Int. Cl.: H04N 5/74, B60K 35/23, G02B 27/01, G09G 5/00, G09G 5/38

(54) **IMAGE PROJECTION DEVICE AND IMAGE PROJECTION METHOD**

(30) Priority: 30.05.2023 JP 2023089286
(71) Applicant: Koito Manufacturing Co., Ltd., Shinagawa-ku, Tokyo 141-0001 (JP)
(72) Inventor: ICHII, Sekai, Shizuoka-shi, Shizuoka 424-8764 (JP)
(74) Representative: Zimmermann, Tankred Klaus
(86) International application number: PCT/JP2024/018582
(87) International publication number: WO 2024/247798

(57) **Abstract**

Provided are an image projection device and an image projection method capable of suppressing variation in an image formation position of an image due to pitching of a vehicle and improving the visibility of the image. An image projection device (100) for projecting a virtual image via a display unit includes an image emission unit (140) that emits an image for forming the virtual image as image display light, an acceleration acquisition unit (110) that acquires an acceleration applied to a vehicle, a vehicle information acquisition unit (120) that acquires driving state information on the vehicle, and an image position correction unit (130) that corrects a display position of the image based on the acceleration and the driving state information.

## Description

### TECHNICAL FIELD

The present invention relates to an image projection device and an image projection method, and more particularly to an image projection device and an image projection method for emitting a projection image to a display unit for displaying a virtual image.

### BACKGROUND ART

Conventionally, an instrument panel that lights up and displays an icon has been used as a device that displays various types of information in a vehicle. With an increase in the amount of information to be displayed, it has also been proposed to incorporate an image display device into the instrument panel or to form the entire instrument panel by the image display device.

However, since the instrument panel is located below the windshield of the vehicle, it is not preferable for a driver to visually recognize the information displayed on the instrument panel because the driver needs to move the line of sight downward during driving. For this reason, there has also been proposed a head-up display (hereinafter referred to as HUD) that projects an image on a windshield to enable a driver to read information when the driver visually recognizes the image in front of a vehicle (see, e.g., Patent Literatures 1 and 2).

### CITATION LIST

### PATENT LITERATURE

Patent Literature 1: JP-A-2019-119248
Patent Literature 2: JP-A-2019-119262

### SUMMARY OF INVENTION

### PROBLEMS TO BE SOLVED BY INVENTION

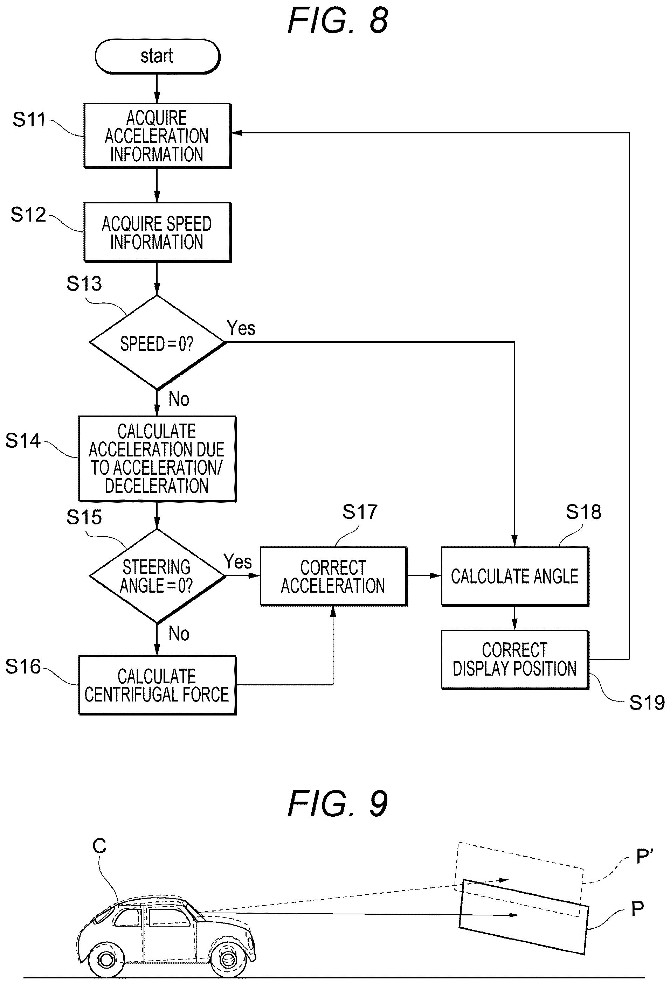

In such a conventional image projection device, the windshield (display unit) of the vehicle is irradiated with image light from an image emission unit, and a driver can visually recognize the image light reflected by the windshield and a background in front of the vehicle in a superimposed manner. Fig. 9 is a schematic view for describing projection of a virtual image by the image projection device and shake of the virtual image due to pitching of the vehicle. As indicated by a solid line in Fig. 9, while a vehicle C is traveling on a road surface, the image projection device projects a virtual image P ahead of the vehicle C via the windshield. When pitching occurs in the vehicle C, the projection direction of a virtual image P' also changes along with inclination of the vehicle C as indicated by a broken line in Fig. 9.

As illustrated in Fig. 9, in the image projection device mounted on the vehicle C, since the relative positional relationship of the windshield does not change, the inclination angle of the vehicle in the front-rear direction thereof varies due to a load or unevenness of a road surface, and in a case where pitching occurs, the display position of the virtual image on the background also varies. In general, the direction of the line of sight of a driver does not greatly change even when pitching occurs in the vehicle C, and there is a tendency to continue to visually recognize a predetermined position of the background. This causes a problem that the driver feels that the virtual image P vibrates in the P' direction.

The present invention has been made in view of the above-described conventional problems, and is intended to provide an image projection device and an image projection method capable of suppressing variation in an image formation position of an image due to pitching of a vehicle and improving the visibility of the image.

### SOLUTION TO PROBLEMS

In order to solve the above-described problem, the image projection device of the present invention is an image projection device for projecting a virtual image via a display unit, which includes an image emission unit that emits an image for forming the virtual image as image display light, an acceleration acquisition unit that acquires an acceleration applied to a vehicle, a vehicle information acquisition unit that acquires driving state information on the vehicle, and an image position correction unit that corrects a display position of the image based on the acceleration and the driving state information.

In the image projection device of the present invention as described above, since the image position correction unit corrects the image display position based on the acceleration and the driving state information, it is possible to suppress variation in an image formation position due to pitching of the vehicle and improve the visibility of the image.

In one aspect of the present invention, the driving state information includes vehicle speed information on the vehicle, and the image position correction unit corrects the display position based on a traveling-causing acceleration calculated from the vehicle speed information.

In one aspect of the present invention, the driving state information includes steering angle information on the vehicle, and the image position correction unit corrects the display position based on a centrifugal force calculated from the vehicle speed information and the steering angle information.

In one aspect of the present invention, the image position correction unit calculates a change amount of an image formation position of the virtual image based on the acceleration and the driving state information, and corrects the display position of the image in a direction of offsetting the change amount.

In one aspect of the present invention, the image includes a near image formed at a predetermined distance from the display unit and a far image formed at a distance farther from the display unit than the near image, and the image position correction unit corrects at least the display position of the far image.

In one aspect of the present invention, the display position of the near image is corrected.

In one aspect of the present invention, a correction amount of the display position of the far image is greater than a correction amount of the display position of the near image.

In order to solve the above-described problems, the image projection method of the present invention is an image projection method for projecting a virtual image via a display unit. The image projection method includes an image emission step of emitting an image for forming the virtual image as image display light, an acceleration acquisition step of acquiring an acceleration applied to a vehicle, a vehicle information acquisition step of acquiring driving state information on the vehicle, and an image position correction step of correcting a display position of the image based on the acceleration and the driving state information.

### EFFECTS OF INVENTION

The present invention can provide the image projection device and the image projection method capable of suppressing variation in the image formation position of an image due to pitching of the vehicle and improving the visibility of the image.

### BRIEF DESCRIPTION OF DRAWINGS

Fig. 1 is a schematic view for describing projection of a far image and a near image using an image projection device according to a first embodiment.
Fig. 2 is a block diagram illustrating the configuration of an image projection device 100 according to the first embodiment.
Fig. 3 illustrates graphs of a relationship between an acceleration measured by an acceleration sensor and driving state information, Fig. 3(a) illustrating a stationary state of a vehicle C on a flat surface, Fig. 3(b) illustrating a state in which the vehicle C tilts in the stationary state, and Fig. 3(c) illustrating a state in which the vehicle C tilts in an acceleration/deceleration state.
Fig. 4 is a flowchart illustrating steps of an image projection method according to the first embodiment.
Fig. 5 illustrates schematic views of an image display area and correction of an image in the first embodiment, Fig. 5(a) illustrating the stationary state on the flat surface, Fig. 5(b) illustrating a state in which the vehicle C swings upward, and Fig. 5(c) illustrating a state in which the vehicle C swings downward.
Fig. 6 illustrates schematic views of an image display area and correction of an image in a second embodiment, Fig. 6(a) illustrating a stationary state on a flat surface, Fig. 6(b) illustrating a state in which a vehicle C swings upward, and Fig. 6(c) illustrating a state in which the vehicle C swings downward.
Fig. 7 illustrates schematic views of an image display area and correction of an image in a third embodiment, Fig. 7(a) illustrating a stationary state on a flat surface, Fig. 7(b) illustrating a state in which a vehicle C swings upward, and Fig. 7(c) illustrating a state in which the vehicle C swings downward.
Fig. 8 is a flowchart illustrating steps of an image projection method according to a fourth embodiment.
Fig. 9 is a schematic view for describing projection of a virtual image by an image projection device and shake of the virtual image due to pitching of a vehicle.

### DESCRIPTION OF EMBODIMENTS

### (First Embodiment)

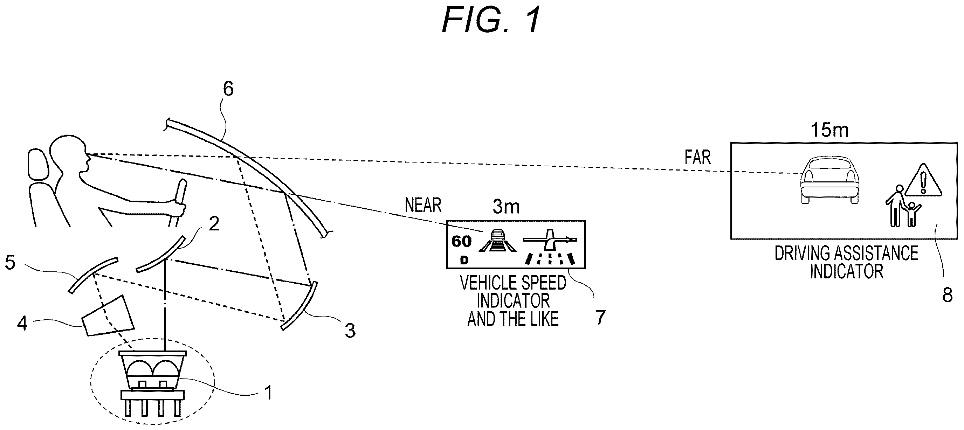

Hereinafter, an embodiment of the present invention will be described in detail with reference to the drawings. The same or equivalent components, members, and processes illustrated in the drawings are denoted by the same reference numerals, and overlap description thereof will be omitted as necessary. Fig. 1 is a schematic view for describing projection of a far image and a near image using an image projection device according to the present embodiment. As illustrated in Fig. 1, the image projection device includes an image display unit 1, a reflection mirror 2, a free-form surface mirror 3, a light splitting unit 4, a free-form surface mirror 5, and a windshield 6.

The image display unit 1 is a unit that emits light including an image based on image information from a control unit. A specific configuration of the image display unit 1 is not limited, and a conventionally-known configuration such as a liquid crystal display device, an organic EL display device, or a combination of a laser light source and a light modulation element can be used. In an example illustrated in Fig. 1, light is emitted from a light emitting diode (LED) from the back side of the liquid crystal display device. As described later, the image display unit 1 includes a far display area and a near display area for displaying the far image and the near image, respectively. Examples of the far image displayed in the far display area include auxiliary information regarding driving, such as a warning image and emergency information. In addition, examples of the near image displayed in the near display area include a speed and sound volume indicator, a traveling direction guide, and the like.

The reflection mirror 2 is an optical member into which second image light emitted from the image display unit 1 enters and which reflects first image light toward the free-form surface mirror 3. In the example illustrated in Fig. 1, a convex mirror is illustrated as the reflection mirror 2, but an optically-designed mirror necessary for projecting the first image light as the virtual image can be used, and as necessary, a concave mirror, a flat mirror, a free-form surface mirror, or the like can be used. Alternatively, the reflection mirror 2 may be omitted, and the first image light from the image display unit 1 may directly enter the free-form surface mirror 3.

The free-form surface mirror 3 is a concave mirror into which the first image light reflected by the free-form surface mirror 5 and the second image light reflected by the reflection mirror 2 enter and which reflects the second image light toward the windshield 6. The reflection surface of the free-form surface mirror 3 is designed to enlarge a light diameter in the direction of the point of view of a driver in order to project the light as a virtual image 7.8 through the windshield 6. Here, enlarging the light diameter in the direction of the point of view includes not only a case where the light diameter is consistently enlarged after reflection, but also a case where the light diameter is reduced, an image is formed at an intermediate point, and then the light diameter is enlarged.

The light splitting unit 4 is an optical member that splits the image light emitted from the image display unit 1, and splits the image light at least into the first image light as a first image displayed in the far display area and the second image light as a second image displayed in the near display area. The structure of the light splitting unit 4 is not limited as long as the light splitting unit 4 is the optical member that splits light, and a prism may be used or a technique of making the incident angle and reflection angle of light different by a reflection mirror may be used. In the example illustrated in Fig. 1, the prism is used as the light splitting unit 4, and is disposed so as to overlap with the far display area of the image display unit 1. Thus, the first image light emitted from the far display area is reflected by the free-form surface mirror 5 on a path different from that for the second image light by the light splitting unit 4, and reaches the free-form surface mirror 3. The second image light emitted from the near display area is reflected by the reflection mirror 2, and reaches the free-form surface mirror 3.

Here, disposing the light splitting unit 4 so as to overlap with the image display unit 1 means that an area where the light splitting unit 4 is disposed overlaps with an image display area of the image display unit 1 in plan view. In addition, both a case where the light splitting unit 4 and the image display unit 1 are in contact with each other and a case where the light splitting unit 4 and the image display unit 1 are not in contact with each other are included in the overlapping disposing. Further, a case where an optical member allowing light to transmit between the light splitting unit 4 and the image display unit 1 or a holding member maintaining a distance therebetween is interposed between the light splitting unit 4 and the image display unit 1 is also included in the overlapping disposing.

The free-form surface mirror 5 is an optical member into which the first image light enters through the light splitting unit 4 and which reflects the first image light toward the free-form surface mirror 3. The reflection surface of the free-form surface mirror 5 is designed to enlarge a light diameter in the direction of the point of view of the driver in order to project the light as a virtual image 8 through the windshield 6. Here, enlarging the light diameter in the direction of the point of view includes not only a case where the light diameter is consistently enlarged after reflection, but also a case where the light diameter is reduced, an image is formed at an intermediate point, and then the light diameter is enlarged.

The windshield 6 is a component provided in front of a driver's seat of a vehicle C and allowing visible light to transmit therethrough. The windshield 6 reflects, on the surface inside the vehicle C, the first image light and the second image light having entered from the free-form surface mirror 3 in the direction of the point of view, and allows light from the outside of the vehicle C to transmit therethrough in the direction of the point of view. Thus, the windshield 6 is equivalent to a display unit in the present invention. Although the example where the windshield 6 is used as the display unit has been described here, a combiner may be prepared as the display unit separately from the windshield 6, and the light from the free-form surface mirror 3 may be reflected in the direction of the point of view. In addition, the windshield 6 is not limited to one located on the front side of the vehicle C, and may be disposed at the side or rear as long as an image is projected with respect to the point of view of a passenger.

The virtual images 7, 8 are images displayed as if these images are formed in the air when the first image light and the second image light reflected by the windshield 6 reach the point of view (eye box) of the driver or the like. Positions at which the virtual images 7, 8 are formed are determined by a divergence angle when the light emitted from the image display unit 1 travels in the direction of the point of view after having been reflected by the reflection mirror 2, the free-form surface mirror 3, the free-form surface mirror 5, and the windshield 6.

In the image projection device illustrated in Fig. 1, part of the light emitted from the image display unit 1 is split by the light splitting unit 4, reflected by the free-form surface mirror 5, the free-form surface mirror 3, and the windshield 6, and reaches the point of view of the driver, and the virtual image 8 is formed far away. Another part of the light emitted from the image display unit 1 is reflected by the reflection mirror 2, the free-form surface mirror 3, and the windshield 6, and reaches the point of view of the driver, and the virtual image 7 is formed near. As a result, in the image projection device, the virtual image 8 is projected at a distance several degrees downward from the horizontal direction (about 15 m from the driver in Fig. 1), and it is possible to reduce movement of the driver's line of sight for visually recognizing driving assistance information. In addition, the virtual image 7 is projected near and further downward (about 3 m from the driver in Fig. 1), and the displayed vehicle speed and the like can be favorably visually recognized by moving the line of sight.

In the example illustrated in Fig. 1, the reflection mirror 2, the free-form surface mirror 3, the light splitting unit 4, and the free-form surface mirror 5 are provided as the projection optical system of the image projection device as an example, but a reflection mirror or a lens may be further provided as another optical member. In addition, in Fig. 1, the far image and the near image are projected at different positions as the virtual images 7, 8 as an example, but one image may be projected.

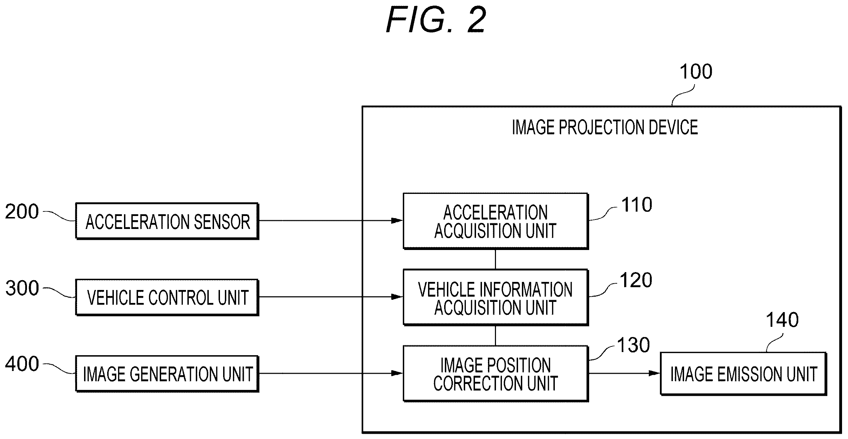

Fig. 2 is a block diagram illustrating the configuration of an image projection device 100 according to the present embodiment. As illustrated in Fig. 2, the image projection device 100 includes an acceleration acquisition unit 110, a vehicle information acquisition unit 120, an image position correction unit 130, and an image emission unit 140. The image projection device 100 can acquire information from an acceleration sensor 200, a vehicle control unit 300, and an image generation unit 400. In addition, the image projection device 100 includes the control unit connected to communicate information with each unit and configured to control each unit (not illustrated). The configuration of the control unit is not limited, and examples thereof include a central processing unit (CPU) for performing information processing and one including a memory device, a recording medium, an information communication device, or the like. The control unit controls operation of each unit according to a predetermined program.

The acceleration sensor 200 is a component mounted on the vehicle C and configured to detect an acceleration applied to the vehicle C. The acceleration detected by the acceleration sensor 200 is transmitted to the acceleration acquisition unit 110. A specific configuration of the acceleration sensor 200 is not limited, and a conventionally-known 9-axis sensor device or the like mounted on the vehicle C can be used. In addition, although Fig. 2 illustrates the example where the acceleration sensor 200 is provided outside the image projection device 100, the acceleration sensor 200 may be provided inside the image projection device 100.

The vehicle control unit 300 is a component that acquires the operation state of each unit forming the vehicle C as driving state information. The driving state information acquired by the vehicle control unit 300 is transmitted to the vehicle information acquisition unit 120. Examples of the driving state information acquired by the vehicle control unit 300 include vehicle speed information which is the moving speed of the vehicle C and a steering angle information speed which is a steering angle. A specific configuration of the vehicle control unit 300 is not limited, and for example, an electrical control unit (ECU) mounted on the vehicle C can be used.

The image generation unit 400 is a component that generates the image information to be emitted from the image emission unit 140. The image information generated by the image generation unit 400 is transmitted to the image position correction unit 130. The image generated by the image generation unit 400 may be a still image or a moving image. The contents of the image generated by the image generation unit 400 are not limited, and examples thereof include the auxiliary information regarding driving, such as a warning image and emergency information, the speed and sound volume indicator, the traveling direction guide, and the like, as described above.

The acceleration acquisition unit 110 acquires the acceleration from the acceleration sensor 200, and transmits the acceleration information to the image position correction unit 130. The acceleration acquisition unit 110 is a function implemented by executing a predetermined program by the control unit provided in the image projection device 100. In the example illustrated in Fig. 2, the acceleration acquisition unit 110 acquires the acceleration from the acceleration sensor 200 provided outside the image projection device 100, but the acceleration sensor 200 and the acceleration acquisition unit 110 may be integrally provided in the image projection device 100.

The vehicle information acquisition unit 120 is a component that acquires the driving state information from the vehicle control unit 300 and transmits the driving state information to the image position correction unit 130. The vehicle information acquisition unit 120 is a function implemented by executing a predetermined program by the control unit provided in the image projection device 100. In the example illustrated in Fig. 2, the vehicle information acquisition unit 120 acquires the driving state information from the vehicle control unit 300 provided outside the image projection device 100, but the vehicle control unit 300 and the vehicle information acquisition unit 120 may be integrally provided in the image projection device 100.

The image position correction unit 130 is a component that acquires the image information from the image generation unit 400, acquires the acceleration from the acceleration acquisition unit 110, acquires the driving state information from the vehicle information acquisition unit 120, and corrects the image light emitted from the image emission unit 140 based on the acceleration and the driving state information. The image position correction unit 130 is a function implemented by executing a predetermined program by the control unit provided in the image projection device 100. In the example illustrated in Fig. 2, the image position correction unit 130 acquires the image information from the image generation unit 400 provided outside the image projection device 100, but the image generation unit 400 and the image position correction unit 130 may be integrally provided in the image projection device 100. In addition, a specific configuration of the image position correction unit 130 is not limited, and the image generated by the image generation unit 400 may be shifted by a predetermined amount or the angle of the projection optical system may be physically moved such that the display position on the image emission unit 140 changes.

The image emission unit 140 is a component that projects the virtual images 7, 8 through the windshield 6 based on the image information. In the example illustrated in Fig. 1, a combination of the image display unit 1, the reflection mirror 2, the free-form surface mirror 3, the light splitting unit 4, and the free-form surface mirror 5 corresponds to the image emission unit 140.

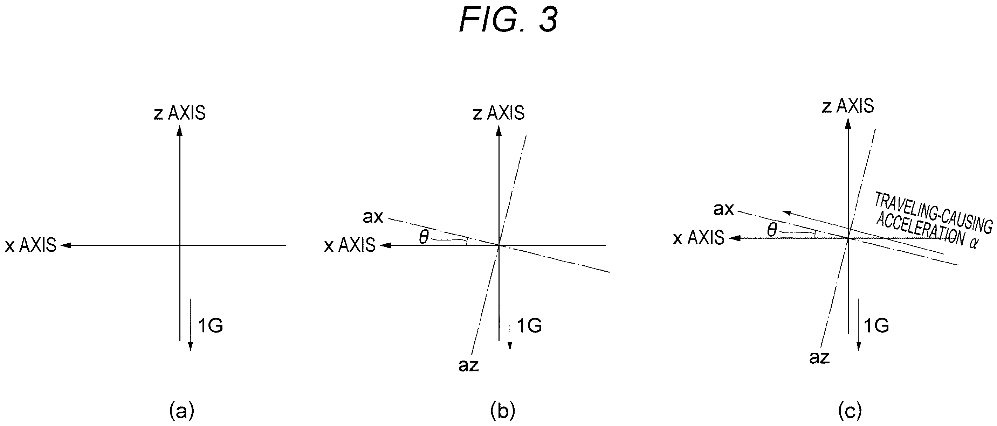

Fig. 3 illustrates graphs of a relationship between the acceleration measured by the acceleration sensor and the driving state information. Fig. 3(a) illustrates a stationary state of the vehicle C on a flat surface, Fig. 3(b) illustrates a state in which the vehicle C tilts in the stationary state, and Fig. 3(c) illustrates a state in which the vehicle C tilts in an acceleration/deceleration state. An X axis in the figure indicates the horizontal direction of the ground surface, and is a positive direction from the right to the left in the figure toward the front of the vehicle C. In addition, a Z axis in the figure indicates the direction of the force of gravity on the ground surface, and is a positive direction from the bottom to the top in the figure toward the top of the vehicle C. Here, the acceleration applied in the front-rear direction of the vehicle C and detected by the acceleration sensor 200 is defined as ax, and the acceleration applied in the up-down direction of the vehicle C is defined as az. In addition, an angle (inclination angle) formed between the X axis which is the coordinate system of the ground surface and the ax axis which is the coordinate system of the vehicle C is defined as θ.

In Fig. 3(a), since the vehicle C is stationary on the flat surface, the acceleration applied to the vehicle C is 1 G (9.8 m/s²) in the direction of the force of gravity in the negative direction of the Z axis. In addition, since the vehicle C is in the stationary state on the flat surface, the inclination angle θ between the X axis and the ax axis is θ = 0, and an acceleration of az = 1.0 and ax = 0 is detected.

In Fig. 3(b), since the vehicle C is stationary on the inclined surface, the acceleration applied to the vehicle C is 1 G in the direction of the force of gravity in the negative direction of the Z axis. In addition, since the vehicle C is in the stationary state on the inclined surface, an acceleration of az = 1.0 × cosθ in the az axis direction which is a direction orthogonal to the inclined surface and an acceleration of ax = 1.0 × sinθ in the ax axis direction which is a direction parallel to the inclined surface are detected. Therefore, a relationship of tanθ = (ax/az) is established, and θ = arctan (ax/az) is established. Therefore, the inclination angle θ of the inclined surface can be calculated from the ax component and the az component of the acceleration detected by the acceleration sensor 200.

In Fig. 3(c), since the vehicle C is traveling along the inclined surface, 1 G is applied to the vehicle C in the direction of the force of gravity in the negative direction of the Z axis, and a traveling-causing acceleration α is applied from acceleration and deceleration along the inclined surface. Here, since the traveling-causing acceleration α is an acceleration applied along with acceleration/deceleration of the vehicle C, the traveling-causing acceleration α can be calculated from the driving state information acquired by the vehicle information acquisition unit 120. As an example, the traveling-causing acceleration α accompanied by acceleration/deceleration of the vehicle C can be calculated by time-differentiating the vehicle speed information included in the driving state information.

In addition, since the vehicle C is in the traveling state on the inclined surface, an acceleration of az = 1.0 × cosθ in the az axis direction which is the direction orthogonal to the inclined surface and an acceleration of ax = α + 1.0 × sinθ in the ax axis direction which is the direction parallel to the inclined surface are detected. Therefore, a relationship of tanθ = ((ax - α)/az) is established, and θ = arctan((ax - α)/az) is established. Therefore, the inclination angle θ of the inclined surface can be calculated from the ax component and the az component of the acceleration detected by the acceleration sensor 200 and the traveling-causing acceleration α.

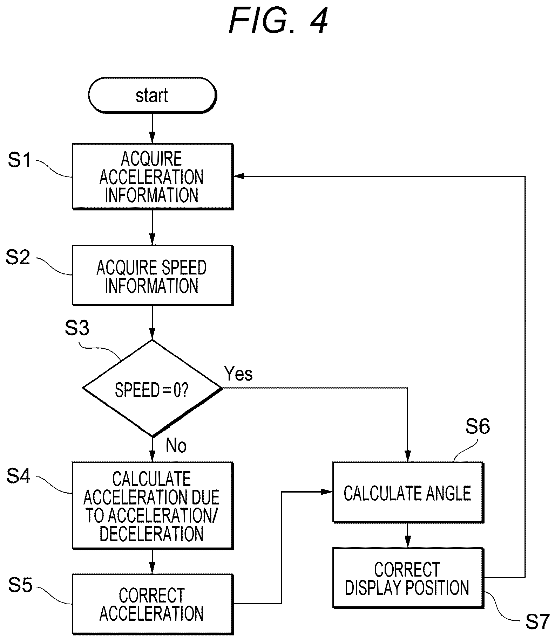

Fig. 4 is a flowchart illustrating steps of an image projection method according to the present embodiment. As illustrated in Fig. 4, the image projection method of the present embodiment is implemented by the image position correction unit 130 executing an acceleration acquisition step, a vehicle information acquisition step, and an image position correction step and correcting the position of the image displayed by the image emission unit 140. The image position correction step further includes a vehicle speed determination step, a traveling-causing acceleration calculation step, an acceleration correction step, and an angle calculation step.

First, in the acceleration acquisition step of Step S1, the image position correction unit 130 acquires acceleration data from the acceleration acquisition unit 110. Next, in the vehicle information acquisition step of Step S2, the image position correction unit 130 acquires the driving state information including the vehicle speed information from the vehicle information acquisition unit 120. Here, the example where the vehicle information acquisition step is executed after the acceleration acquisition step has been described, but the order thereof is not limited and may be reversed, and both these steps may be executed simultaneously.

Next, in the vehicle speed determination step of Step S3, the image position correction unit 130 determines whether or not the vehicle speed included in the driving state information is zero. When the vehicle speed is zero, the processing proceeds to Step S6, and when the vehicle speed is not zero, the processing proceeds to Step S4. Although the example where the vehicle speed determination step is executed has been described, the vehicle speed determination step may be omitted and the processing may proceed to Step S4 regardless of the vehicle speed.

Next, in the traveling-causing acceleration calculation step of Step S4, the image position correction unit 130 calculates the traveling-causing acceleration α from the vehicle speed included in the driving state information. More specifically, for example, α = (v2 - v1)/(t2 - t1) is obtained from a vehicle speed v1 at a time point t1 and a vehicle speed v2 at a time point t2. When the driving state information includes not only the vehicle speed but also the traveling-causing acceleration α, the traveling-causing acceleration calculation step can be omitted. When the traveling-causing acceleration calculation step is executed without executing the vehicle speed determination step, the traveling-causing acceleration α = 0 because the vehicle speeds v1, v2 are zero.

Next, in the acceleration correction step of Step S5, the image position correction unit 130 takes a difference of the traveling-causing acceleration α from the ax component of the acceleration on the coordinate axis of the vehicle C, which is detected by the acceleration sensor 200, and corrects the acceleration caused by the inclination to (ax - α) and az. Next, in the angle calculation step of Step S6, the image position correction unit 130 calculates the inclination angle θ by θ = arctan((ax - α)/az) from (ax - α) and az of the corrected acceleration. Here, although the acceleration correction step and the angle calculation step have been described as separate steps, both these steps may be executed in one step. When the vehicle speed is determined to be zero in the vehicle speed determination step, the inclination angle θ is calculated by θ = arctan(ax/az) with the traveling-causing acceleration α = 0.

Next, in the image position correction step of Step S7, the image position correction unit 130 corrects the display position of the image emitted from the image emission unit 140 based on the inclination angle θ calculated in the angle calculation step. As described above, since the inclination angle θ is calculated based on the acceleration acquired by the acceleration acquisition unit 110 and the driving state information acquired by the vehicle information acquisition unit 120, correction of the display position of the image is based on the acceleration and the driving state information. After the display position correction step, the image emission unit 140 executes an image emission step and projects image display light to the corrected display position of the image. A specific correction of the display position will be described later. When the display position correction step ends, the processing proceeds to Step S1 again and repeatedly executes the image projection method.

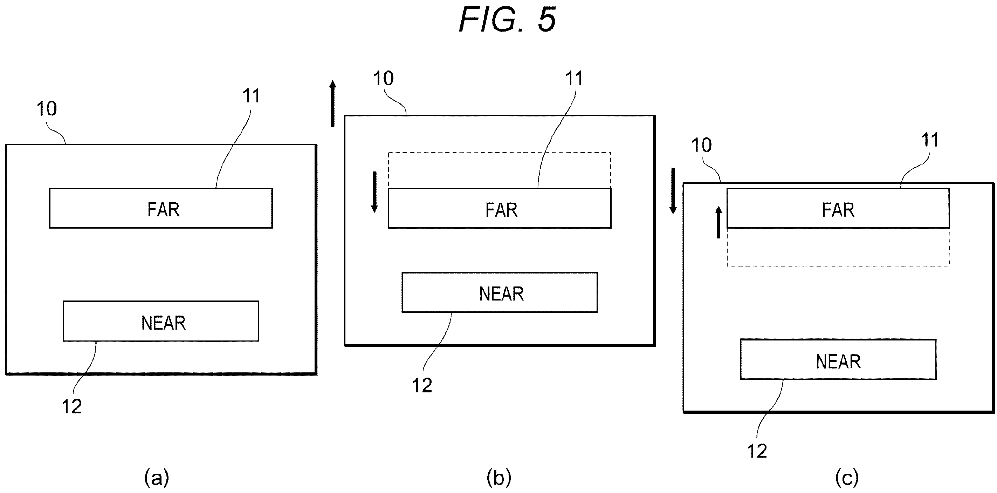

Fig. 5 illustrates schematic views of an image display area and correction of an image in the present embodiment, Fig. 5(a) illustrates the stationary state on the flat surface, Fig. 5(b) illustrates a state in which the vehicle C swings upward, and Fig. 5(c) illustrates a state in which the vehicle C swings downward. An outer frame illustrated in the figure schematically illustrates the entire display area 10 which is the entire area where the image can be displayed by the image emission unit 140. Part of the entire display area 10 is a far display area 11, and another part is a near display area 12. The first image (far image) is displayed in the far display area 11, and the second image (near image) is displayed in the near display area 12. An area indicated by a broken line in the figure is a reference position of the far display area 11.

An example illustrated in Fig. 5(a) is the stationary state on the flat surface, and the far display area 11 and the near display area 12 are set at a reference position of the entire display area 10. Here, the stationary state on the flat surface is set as the reference position, but when the inclination angle θ calculated in the angle calculation step is zero, the far display area 11 and the near display area 12 are set as the reference position regardless of whether the vehicle C is traveling at a certain speed or accelerating/decelerating.

An example illustrated in Fig. 5(b) is a case where the vehicle C swings in the direction of an upward arrow, and the entire display area 10 moves upward with respect to the background. In this case, the far display area 11 is corrected and set in the direction of a downward arrow in order to cancel out movement of the entire display area 10. Since a change amount Δh of the entire display area 10 can be calculated from the inclination angle θ calculated in the angle calculation step, it is preferable to perform correction so as to move the far display area 11 downward by Δh with respect to the entire display area 10.

An example illustrated in Fig. 5(c) is a case where the vehicle C swings in the direction of a downward arrow, and the entire display area 10 moves downward with respect to the background. In this case, the far display area 11 is corrected and set in the direction of an upward arrow in order to cancel out movement of the entire display area 10. Since a change amount Δh of the entire display area 10 can be calculated from the inclination angle θ calculated in the angle calculation step, it is preferable to perform correction so as to move the far display area 11 upward by Δh with respect to the entire display area 10.

In Figs. 5(b) and 5(c), the far display area 11 is corrected by the same amount as the change amount Δh of the entire display area 10, but may be corrected greater or smaller than the change amount Δh as long as the correction is performed in a direction of offsetting Δh. Furthermore, when the change amount Δh occurs in the entire display area 10, the position of the far display area 11 may be immediately corrected, or the position may be gently corrected with the lapse of time by providing a predetermined time constant.

As described above, in the image projection device 100 and the image projection method of the present embodiment, since the image position correction unit 130 corrects the image display position based on the acceleration and the driving state information, it is possible to suppress variation in an image formation position of the image due to pitching of the vehicle C and improve the visibility of the image. In addition, the virtual image 8 has a long distance from the position of the point of view of the driver to the image formation position, and deviation from the background due to shift of the image formation position due to vibration tends to be great. For this reason, by correcting the position of the far display area 11, it is possible to enhance an effect of reducing misalignment between the virtual image 8 and the background and improving the visibility.

### (Second Embodiment)

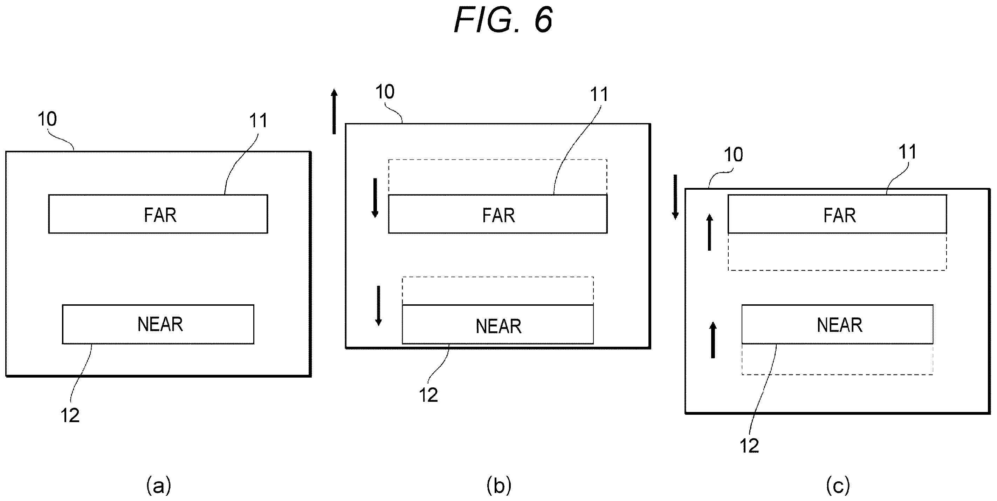

Next, a second embodiment of the present invention will be described with reference to Fig. 6. Description of contents overlapping with those of the first embodiment will be omitted. Fig. 6 illustrates schematic views of the image display area and correction of the image in the present embodiment, Fig. 6(a) illustrates the stationary state on the flat surface, Fig. 6(b) illustrates a state in which the vehicle C swings upward, and Fig. 6(c) illustrates a state in which the vehicle C swings downward. In the first embodiment, only the position of the far display area 11 is corrected, but in the present embodiment, the position of the far display area 11 and the position of the near display area 12 are similarly corrected.

An example illustrated in Fig. 6(a) is the stationary state on the flat surface, and the far display area 11 and the near display area 12 are set at the reference position of the entire display area 10. Examples illustrated in Figs. 6(b) and 6(c) are cases where the vehicle C swings in the direction of an arrow, and the entire display area 10 moves upward or downward with respect to the background. In this case, the far display area 11 and the near display area 12 are corrected and set in a direction of cancelling out movement of the entire display area 10.

Also in the image projection device 100 and the image projection method of the present embodiment, since the image position correction unit 130 corrects the image display position based on the acceleration and the driving state information, it is possible to suppress variation in the image formation position of the image due to pitching of the vehicle C and improve the visibility of the image. By correcting the positions of the far display area 11 and the near display area 12, it is possible to enhance an effect of reducing misalignment between the virtual images 7, 8 and the background and improving the visibility.

### (Third embodiment)

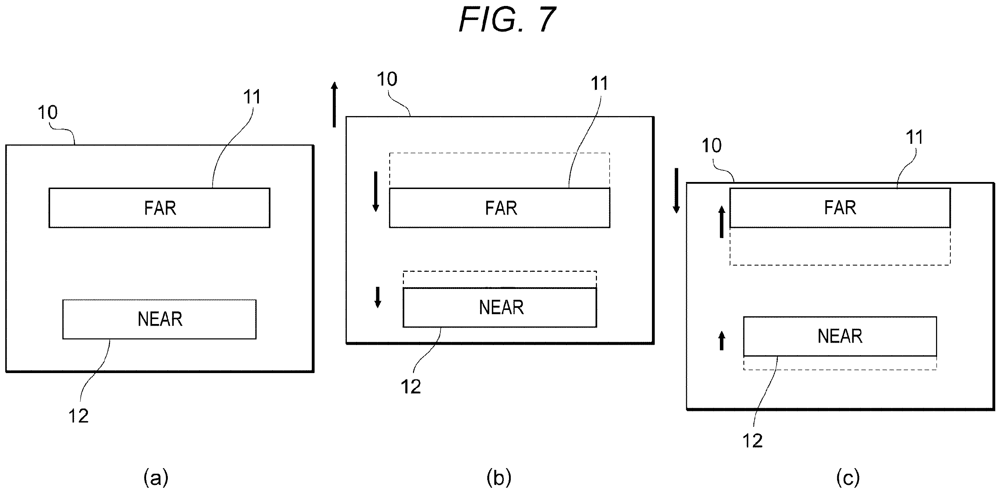

Next, a third embodiment of the present invention will be described with reference to Fig. 7. Description of contents overlapping with those of the first embodiment will be omitted. Fig. 7 illustrates schematic views of the image display area and correction of the image in the present embodiment, Fig. 7(a) illustrates the stationary state on the flat surface, Fig. 7(b) illustrates a state in which the vehicle C swings upward, and Fig. 7(c) illustrates a state in which the vehicle C swings downward. In the second embodiment, the positions of the far display area 11 and the near display area 12 are similarly corrected, but in the present embodiment, the correction amounts of the far display area 11 and the near display area 12 are different from each other.

An example illustrated in Fig. 7(a) is the stationary state on the flat surface, and the far display area 11 and the near display area 12 are set at the reference position of the entire display area 10. Examples illustrated in Figs. 7(b) and 7(c) are cases where the vehicle C swings in the direction of an arrow, and the entire display area 10 moves upward or downward with respect to the background. In this case, the far display area 11 and the near display area 12 are corrected and set in a direction of cancelling out movement of the entire display area 10. In addition, the virtual image 8 has a long distance from the position of the point of view of the driver to the image formation position, and deviation from the background due to shift of the image formation position due to vibration tends to be great. For this reason, the correction amount of the far display area 11 is preferably greater than the correction amount of the near display area 12.

### (Fourth Embodiment)

Next, a fourth embodiment of the present invention will be described with reference to Fig. 8. Description of contents overlapping with those of the first embodiment will be omitted. Fig. 8 is a flowchart illustrating steps of the image projection method according to the present embodiment. As illustrated in Fig. 8, the image projection method of the present embodiment includes a steering angle determination step and a centrifugal force calculation step. A steering angle is acquired in the vehicle information acquisition step, and the steering angle determination step and the centrifugal force calculation step are included in the image position correction step.

First, in the acceleration acquisition step of Step S11, the acceleration data is acquired from the acceleration acquisition unit 110. Next, in the vehicle information acquisition step of Step S12, the driving state information including the vehicle speed information and the steering angle information is acquired from the vehicle information acquisition unit 120. Next, in the vehicle speed determination step of Step S13, it is determined whether or not the vehicle speed included in the driving state information is zero. When the vehicle speed is zero, the processing proceeds to Step S18, and when the vehicle speed is not zero, the processing proceeds to Step S14. Next, in the traveling-causing acceleration calculation step of Step S14, the traveling-causing acceleration α is calculated from the vehicle speed included in the driving state information.

Next, in the steering angle determination step of Step S15, it is determined whether or not the steering angle included in the driving state information is zero. When the steering angle is zero, the processing proceeds to Step S17, and when the steering angle is not zero, the processing proceeds to Step S16. Next, in the centrifugal force calculation step of Step S16, a centrifugal force applied to the vehicle C is calculated from the steering angle and the vehicle speed included in the driving state information. Next, in the acceleration correction step of Step S17, the ax component of the acceleration on the coordinate axis of the vehicle C, which is detected by the acceleration sensor 200, is corrected using the traveling-causing acceleration α and the acceleration β due to the centrifugal force. Next, in the angle calculation step of Step S18, the inclination angle θ is calculated from the corrected acceleration.

Next, in the image position correction step of Step S19, the image position correction unit 130 corrects the display position of the image emitted from the image emission unit 140 based on the inclination angle θ calculated in the angle calculation step.

As described above, also in the image projection device 100 and the image projection method of the present embodiment, since the image position correction unit 130 corrects the image display position based on the acceleration and the driving state information, it is possible to suppress variation in the image formation position of the image due to pitching of the vehicle C and improve the visibility of the image. In addition, the vehicle speed information and the steering angle information are included in the driving state information, and by calculating the centrifugal force and correcting the influence of the centrifugal force, it is possible to more accurately calculate the inclination angle θ and prevent shake of the virtual images 7, 8.

### (Fifth embodiment)

Next, a fifth embodiment of the present invention will be described. Description of contents overlapping with those of the first embodiment will be omitted. In the first to third embodiments, the image position correction unit 130 corrects the positions of the far display area 11 and the near display area 12 in the entire display area 10 to correct the shake of the virtual images 7, 8 caused by the inclination angle θ, but in the present embodiment, the projection optical system is mechanically driven to correct the shake.

As an example, the inclination angle of the reflection mirror 2, the free-form surface mirror 3, the light splitting unit 4, or the free-form surface mirror 5 forming the projection optical system in Fig. 1 can be changed. The image position correction unit 130 drives a motor device or the like to change the orientation of the reflection mirror 2, the free-form surface mirror 3, the light splitting unit 4, or the free-form surface mirror 5 in a direction of offsetting the inclination angle θ. When the motor device is used, it is preferable to use a stepping motor capable of precisely controlling a rotation angle.

The present invention is not limited to each of the above-described embodiments, and various changes can be made within the scope of the claims, and embodiments obtained by appropriately combining techniques disclosed in different embodiments are also included in the technical scope of the present invention.

The present international application claims priority based on Japanese Patent Application No. 2023-089286 filed on May 30, 2023, and the entire contents of Japanese Patent Application No. 2023-089286 are incorporated herein by reference.

The description of the specific embodiments of the present invention is presented for the purpose of illustration. The specific embodiments are not intended to be exhaustive or to limit the invention as it is in the form described. It is obvious to those skilled in the art that many modifications and alterations are possible in light of the contents of the description above.

### LIST OF REFERENCE SIGNS

- 100: Image Projection Device
- 110: Acceleration Acquisition Unit
- 120: Vehicle Information Acquisition Unit
- 130: Image Position Correction Unit
- 140: Image Emission Unit
- 200: Acceleration Sensor
- 300: Vehicle Control Unit
- 400: Image Generation Unit
- 1: Image Display Unit
- 2: Reflection Mirror
- 3,5: Free-Form Surface Mirror
- 4: Light Splitting Unit
- 6: Windshield
- 10: Entire Display Area
- 11: Far Display Area
- 12: Near Display Area

## Claims

1. An image projection device for projecting a virtual image via a display unit, comprising:
an image emission unit that emits an image for forming the virtual image as image display light;
an acceleration acquisition unit that acquires an acceleration applied to a vehicle;
a vehicle information acquisition unit that acquires driving state information on the vehicle; and
an image position correction unit that corrects a display position of the image based on the acceleration and the driving state information.

2. The image projection device according to claim 1, wherein
the driving state information includes vehicle speed information on the vehicle, and
the image position correction unit corrects the display position based on a traveling-causing acceleration calculated from the vehicle speed information.

3. The image projection device according to claim 2, wherein
the driving state information includes steering angle information on the vehicle, and
the image position correction unit corrects the display position based on a centrifugal force calculated from the vehicle speed information and the steering angle information.

4. The image projection device according to claim 1, wherein
the image position correction unit calculates a change amount of an image formation position of the virtual image based on the acceleration and the driving state information, and corrects the display position of the image in a direction of offsetting the change amount.

5. The image projection device according to claim 1, wherein
the image includes a near image formed at a predetermined distance from the display unit and a far image formed at a distance farther from the display unit than the near image, and
the image position correction unit corrects at least the display position of the far image.

6. The image projection device according to claim 5, wherein
the display position of the near image is corrected.

7. The image projection device according to claim 6, wherein
a correction amount of the display position of the far image is greater than a correction amount of the display position of the near image.

8. An image projection method for projecting a virtual image via a display unit, comprising:
an image emission step of emitting an image for forming the virtual image as image display light;
an acceleration acquisition step of acquiring an acceleration applied to a vehicle;
a vehicle information acquisition step of acquiring driving state information on the vehicle; and
an image position correction step of correcting a display position of the image based on the acceleration and the driving state information.
